(19) Europäisches Patentamt
European Patent Office
Office européen des brevets

(11) **EP 3 339 828 B1**

(12) **FASCICULE DE BREVET EUROPEEN**

(45) Date de publication et mention de la délivrance du brevet:
**31.07.2019 Bulletin 2019/31**

(51) Int Cl.:
*G01K 17/08* (2006.01)     *G01K 17/20* (2006.01)

(21) Numéro de dépôt: **17209128.2**

(22) Date de dépôt: **20.12.2017**

(54) **DISPOSITIF ET PROCÉDÉ D'ÉVALUATION D'AU MOINS UNE CONDITION DE FONCTIONNEMENT D'UN ÉCHANGEUR DE CHALEUR**

VORRICHTUNG UND VERFAHREN ZUR EINSCHÄTZUNG MINDESTENS EINER BETRIEBSBEDINGUNG EINES WÄRMETAUSCHERS

DEVICE AND METHOD FOR EVALUATING AT LEAST ONE OPERATING CONDITION OF A HEAT EXCHANGER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2016 FR 1663010**

(43) Date de publication de la demande:
**27.06.2018 Bulletin 2018/26**

(73) Titulaire: **Commissariat à l'Energie Atomique et aux Energies Alternatives 75015 Paris (FR)**

(72) Inventeurs:
- **MINVIELLE, Zoé**
  **38000 GRENOBLE (FR)**
- **DUCROS, Frédéric**
  **38120 FONTANIL (FR)**
- **MEMPONTEIL, Alain**
  **38600 FONTAINE (FR)**

(74) Mandataire: **Bronchart, Quentin Cabinet Hautier 20, rue de la Liberté 06000 Nice (FR)**

(56) Documents cités:
**WO-A1-2010/082006     US-A1- 2011 051 776**

EP 3 339 828 B1

**Description**

DOMAINE TECHNIQUE DE L'INVENTION

L'invention concerne le domaine des dispositifs et procédés sièges de transferts thermiques où les parois peuvent, à certains moments, être l'objet de phénomènes d'encrassement ou de dégradation, par exemple par perte de matière liée à leur corrosion ou par oxydation. Sont concernés l'industrie chimique, le secteur de l'énergie, incluant le secteur pétrolier, le secteur de l'agro-alimentaire, le secteur des transports, l'industrie du froid, de la climatisation, etc.
L'invention concerne plus particulièrement un dispositif et un procédé d'évaluation des conditions de fonctionnement d'un échangeur thermique incluant tout type de technologies, tel qu'un condenseur, un évaporateur, un échangeur-réacteur, etc.

ÉTAT DE LA TECHNIQUE

La simple mesure de quantités physiques en entrée et en sortie d'un échangeur thermique (mesures de pression et de température, mesure du débit) permet de remonter à la performance moyenne globale du transfert thermique dans l'échangeur thermique. Toutefois, cela ne permet pas d'avoir des indications sur la qualité du transfert thermique local et en particulier de détecter une perte d'efficacité locale, par exemple due à un encrassement local d'une paroi de transfert thermique.
Pour obtenir ce type d'indications locales, il faut mettre en oeuvre des dispositifs de mesures locaux.
De nombreux dispositifs comprenant une sonde de température sont dédiés à la mesure directe ou indirecte des flux thermiques locaux et/ou de températures locales et, par là même, permettent de remonter au coefficient d'échange thermique local, et donc de donner des indications sur les conditions de fonctionnement locales des échangeurs thermiques. Trois dispositifs de ce type sont discutés ci-dessous.
Le document WO 01/94876 A1 propose notamment un dispositif et un procédé pour suivre l'encrassement d'une cuve de combustion d'un échangeur-réacteur à énergie fossile. Selon cette méthode, on évalue une valeur de résistance d'un réseau en matériau conducteur qui est par exemple constitué par les parois des tubes d'un échangeur. A cet effet, ce réseau est soumis à un ou plusieurs signaux électriques donnés. La valeur de résistance ainsi calculée est comparée à une valeur de résistance nominale déterminée sur le même réseau à un instant de référence antérieur. Si la valeur de résistance ainsi obtenue est supérieure à la valeur de résistance nominale, on considère qu'il y a encrassement. Cette solution a en particulier l'inconvénient de ne pouvoir être utilisée qu'avec une contribution des phénomènes de convection thermique (fonctionnement du réacteur à un débit en énergie fossile et à une température de la cuve donnés) qui est celle avec laquelle la mesure de la valeur de résistance nominale a été mesurée.
Le document WO 2007/099240 A1 divulgue un échangeur thermique à plaques empilées incluant un dispositif d'évaluation de son état d'encrassement. Ce dispositif d'évaluation comporte une résistance électrique, qui est thermiquement reliée à la plaque située à l'extrémité de l'empilement et qui est destinée à être parcourue par un courant électrique paramétré pour amplifier le flux de chaleur véhiculé au sein de l'échangeur. Le dispositif d'évaluation comporte également des moyens de mesure de la température (thermocouples) au voisinage direct de ladite résistance électrique. La mesure locale de la température permet de comparer l'évolution de la température au voisinage de la résistance, avec des profils de référence. En fonction de l'écart par rapport aux profils de référence, il est possible de déduire des modifications de capacité thermique de la plaque. Ces modifications étant fonction de l'encrassement de la plaque, le dispositif permet d'évaluer cet encrassement. Cette solution a en particulier l'inconvénient de modifier temporairement l'échange thermique local. D'autre part, le fait que la mesure de température est réalisée à l'opposé de la surface où est généré le flux supplémentaire rend complexe l'interprétation de cette mesure car elle n'est impactée que par la propagation de la perturbation du flux et non par l'augmentation du flux elle-même.
Le document WO 2009/153323 A1 divulgue un dispositif et un procédé pour la détection et/ou la mesure de l'encrassement dans un échangeur thermique. Le procédé consiste à mesurer la valeur résistive d'une sonde de température disposée au niveau d'une paroi de l'échangeur. Plus particulièrement, pendant deux durées successives, la résistance est soumise à deux niveaux de puissance constante. Le premier niveau de puissance P1, choisi de sorte que le flux de chaleur provoqué par effet Joule ait une influence sur la paroi de l'échangeur et non sur la couche d'encrassement lorsqu'elle existe, est inférieur au second niveau de puissance P2 qui est choisi de sorte que le flux de chaleur provoqué par effet Joule ait un impact à la fois sur la paroi de l'échangeur et sur la couche d'encrassement lorsqu'elle existe. Les durées d'application des puissances et leur enchaînement sont choisis de manière à s'assurer de la stabilité des conditions de fonctionnement et à atteindre un régime thermique stationnaire à la fin de l'application des puissances P1 et P2. Des mesures de valeurs résistives sont respectivement effectuées à la fin de l'application des puissances. La différence des mesures de valeurs résistives constitue alors une mesure de la résistance thermique de la couche d'encrassement. Par conséquent, la différence des mesures de valeurs résistives constitue une valeur caractéristique du niveau d'encrassement de la paroi de l'échangeur.

Les trois dispositifs discutés ci-dessus sont dédiés à la mesure de températures locales et/ou de flux thermiques locaux et, par là même, permettent de remonter au coefficient d'échange thermique local, et donc d'évaluer les conditions de fonctionnement locales d'un échangeur thermique. Toutefois, chacune de ces évaluations nécessite de faire des hypothèses fortes sur l'environnement thermique de la sonde de température pour extraire, des mesures physiques, la valeur locale du coefficient d'échange. Par ailleurs, aucune de ces évaluations ne permet de discriminer de quel côté de la paroi se situe l'encrassement. En outre, une fois la valeur locale du coefficient d'échange obtenue, il n'est pas possible, si les termes de convection varient, d'identifier les contributions respectives des phénomènes de convection et de conduction (dans les parois et dans les éventuelles couches d'encrassement) parmi les diverses contributions au coefficient d'échange.

Il est également connu, du document US 2011/0051776 A1, un dispositif utilisé pour l'estimation de la température des tissus profonds, et, du document WO 2010/082006 A1, un système de mesure ou de détection de l'encrassement d'un réacteur, comme par exemple un échangeur thermique, ou d'une conduite contenant un fluide.

Un objet de la présente invention est de répondre, au moins en partie, aux limitations précédemment exposées.

Les autres objets, caractéristiques et avantages de la présente invention apparaîtront à l'examen de la description suivante et des dessins d'accompagnement. Il est entendu que d'autres avantages peuvent être incorporés.

RÉSUMÉ DE L'INVENTION

Pour atteindre cet objectif, selon un premier aspect, la présente invention prévoit une bi-sonde de température comprenant :

- deux mono-sondes de température, comprenant chacune un circuit résistif à base d'un matériau électriquement conducteur thermosensible, chaque circuit résistif étant destiné à être lié à un dispositif de mesure de tension électrique, et
- une couche à base d'un matériau thermiquement isolant intercalée entre les mono-sondes,

de sorte que la bi-sonde présente une résistance thermique Rs fonction de l'épaisseur et de la conductivité thermique de la couche intercalée,
la bi-sonde étant essentiellement telle que chaque circuit résistif est en outre destiné à être lié à un dispositif d'alimentation électrique,
de sorte que des températures d'équilibre des mono-sondes puissent être différentes l'une de l'autre, lorsque l'on applique des courants électriques d'intensités différentes aux circuits résistifs.

Eventuellement, chaque mono-sonde comprend en outre au moins un encapsulant enrobant au moins en partie le circuit résistif ; l'encapsulant est à base d'un matériau diélectrique, de préférence thermostable.

Chaque mono-sonde a ainsi deux fonctions, celle de dissipateur thermique et celle de mesure résistive de température. La bi-sonde selon le premier aspect de l'invention comprend un empilement de deux mono-sondes séparées par une couche thermiquement isolante. Cette couche crée une résistance thermique entre les deux mono-sondes, afin que les températures d'équilibre des mono-sondes puissent être indépendantes ou du moins différentes l'une de l'autre, en particulier lorsque l'on applique des courants électriques d'intensités différentes aux circuits résistifs. De la sorte, la bi-sonde permet d'associer des flux thermiques la traversant à des écarts de température, ou à des écarts d'évolution de température, entre les deux mono-sondes.

Un deuxième aspect de la présente invention concerne un système d'évaluation d'au moins une condition de fonctionnement d'un échangeur de chaleur comprenant :

- au moins une bi-sonde de température telle qu'introduit ci-dessus,
- une paroi d'un échangeur de chaleur à travers laquelle un transfert thermique est destiné à s'opérer entre deux fluides $f$ et $f'$ circulant de part et d'autre de la paroi et sur laquelle est susceptible de se déposer un encrassement,
- un dispositif d'alimentation électrique,
- un dispositif de mesure de courant électrique, et
- un dispositif de supervision du dispositif d'alimentation et du dispositif de mesure.

La bi-sonde de température est disposée sur l'un parmi un premier côté et un second côté de la paroi de l'échangeur de chaleur ; la paroi présente une résistance thermique $Rp$ de référence.

Le système est essentiellement tel que le dispositif d'alimentation électrique est configuré pour alimenter chaque circuit résistif de la bi-sonde et que le dispositif de mesure de courant électrique est configuré pour mesurer le courant électrique circulant dans chaque circuit résistif de la bi-sonde, de sorte que des températures d'équilibre des mono-sondes puissent être différentes l'une de l'autre, lorsque l'on applique des courants électriques d'intensités différentes aux circuits résistifs, et puissent être mesurées indépendamment l'une de l'autre.

Un troisième aspect de la présente invention concerne un procédé d'évaluation d'au moins une condition de fonctionnement d'un échangeur de chaleur mettant en oeuvre un système d'évaluation selon le deuxième aspect de l'invention. Le procédé selon le troisième aspect de l'invention comprend au moins les étapes suivantes, de préférence coordonnées par le dispositif de supervision :

à compter d'un premier instant *t1* :

- alimenter les circuits résistifs avec des courants électriques d'intensités différentes,
- mesurer la tension aux bornes de chacun des circuits résistifs, et éventuellement le courant électrique dans chacun des circuits résistifs, puis
- calculer la température *T1(t1)*, *T2(t1)* de chaque mono-sonde au moins en fonction de la mesure de tension aux bornes du circuit résistif correspondant, et

à compter d'un deuxième instant *t2,* différent du premier instant *t1* :

- alimenter les circuits résistifs avec des courants électriques d'intensités différentes,
- mesurer la tension aux bornes de chacun des circuits résistifs, et éventuellement le courant électrique dans chacun des circuits résistifs, puis
- calculer la température *T1(t2)*, *T2(t2)* de chaque mono-sonde au moins en fonction de la mesure de tension aux bornes du circuit résistif correspondant.

Le procédé comprend en outre au moins l'étape suivante :

- calculer, en fonction de la résistance thermique *Rs* de la bi-sonde, de la résistance thermique *Rp* de la paroi et des températures *T1(t1)*, *T2(t1)*, *T1(t2)* et *T2(t2)* des mono-sondes, au moins l'une des conditions de fonctionnement suivantes : la température *Tf* du fluide *f* du premier côté de la paroi, la résistance thermique *R* du premier côté de la paroi, la température *Tf'* du fluide *f'* du second côté de la paroi et la résistance thermique *R'* du second côté de la paroi.

Qu'un encrassement se soit déposé d'un côté ou des deux côtés de la paroi, le procédé selon le troisième aspect de l'invention permet d'évaluer au moins l'une des conditions de fonctionnement suivantes :

- la température *Tf* du fluide *f* circulant du premier côté de la paroi,
- la température *Tf'* du fluide *f'* circulant du second côté de la paroi,
- la présence ou non d'un encrassement du premier côté de la paroi, et
- la présence ou non d'un encrassement du second côté de la paroi,

du fait que chacune des résistances thermiques *R* et *R'* calculées est proportionnelle à une somme de résistances thermiques de convection et éventuellement d'encrassement *Rcv+Re* et *R'cv+R'e*.

Le procédé permet ainsi de discriminer de quel(s) côté(s) de la paroi un encrassement s'est déposé, par exemple depuis une évaluation nominale ou antérieure des conditions de fonctionnement de l'échangeur de chaleur.

Un quatrième aspect de la présente invention concerne un produit programme d'ordinateur comprenant des instructions, qui, lorsqu'elles sont interprétées et exécutées par au moins un processeur, par exemple du dispositif de supervision, effectuent au moins l'étape de calcul des températures *Tf* et *Tf'* des fluides et des résistances thermiques *R* et *R'* de chaque côté de la paroi selon le procédé concerné par le troisième aspect de l'invention. En variante, le quatrième aspect de la présente invention concerne un média non-transitoire lisible par un ordinateur, comprenant des instructions, qui, lorsqu'elles sont interprétées et exécutées par au moins un processeur, par exemple du dispositif de supervision, effectuent au moins l'étape de calcul des températures *Tf* et *Tf'* des fluides et des résistances thermiques *R* et *R'* de chaque côté de la paroi selon le procédé concerné par le troisième aspect de l'invention.

BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La FIGURE 1 est une représentation schématique en perspective d'un circuit résistif d'une mono-sonde d'une bi-sonde selon un mode de réalisation de l'invention ;

La FIGURE 2 est une représentation schématique en perspective d'une mono-sonde d'une bi-sonde selon un mode de réalisation de l'invention ;

La FIGURE 3 est une représentation schématique en perspective d'un assemblage d'une bi-sonde selon un mode de réalisation de l'invention ;

La FIGURE 4 est une représentation schématique en perspective d'une bi-sonde selon un mode de réalisation de l'invention ;

La FIGURE 5 représente la bi-sonde de la FIGURE 4 à laquelle ont été connectés un dispositif d'alimentation électrique et un dispositif de mesure de courant électrique selon un mode de réalisation de l'invention ;

La FIGURE 6 représente un système d'évaluation selon un mode de réalisation de l'invention comprenant la bi-sonde de la FIGURE 4, un dispositif d'alimentation électrique et un dispositif de mesure de courant électrique reliés à la bi-sonde, une paroi d'un échangeur thermique sur laquelle est disposée la bi-sonde et un dispositif de supervision relié aux dispositifs d'alimentation et de mesure ;

La FIGURE 7 représente schématiquement une vue en coupe transversale de la bi-sonde telle qu'illustrée sur la FIGURE 6 disposée sur la paroi de l'échangeur thermique ;

La FIGURE 8 est un ordinogramme de différentes étapes du procédé d'évaluation des conditions de fonctionnement d'un échangeur de chaleur selon un mode de réalisation de l'invention.

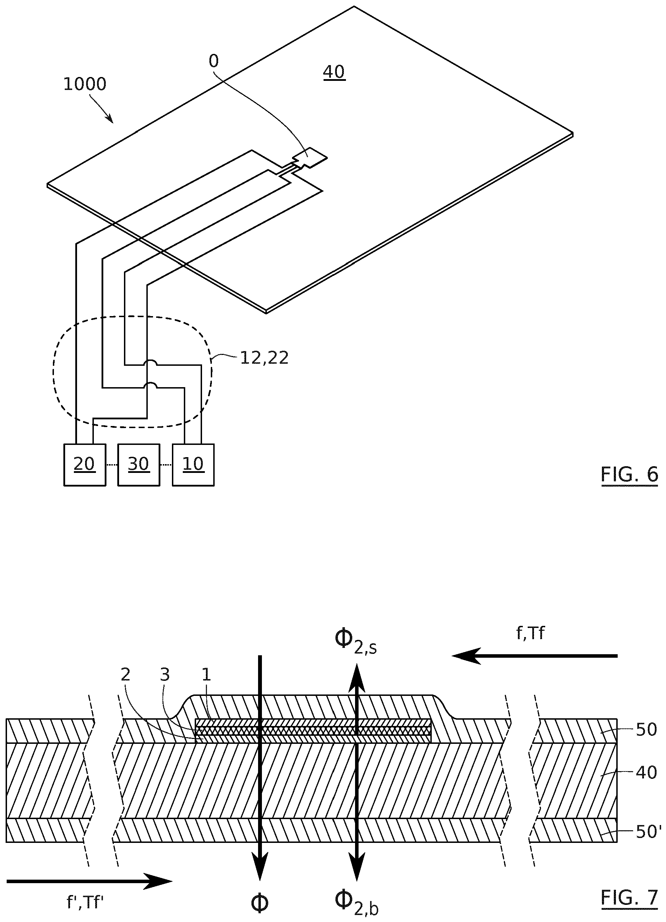

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les épaisseurs relatives des différents éléments du système selon l'invention tels qu'illustrés sur la figure 6 ne sont pas représentatives de la réalité.

## DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :

- le procédé peut comprendre en outre l'étape suivante : calculer un flux thermique $\Phi$ échangé entre les fluides $f$ et $f'$ à travers la paroi en fonction des températures $Tf$ et $Tf'$ des fluides $f$ et $f'$ et des résistances thermiques $R$ et $R'$ ;

- chaque mesure de tension, et éventuellement de courant électrique, est effectuée après qu'un régime stationnaire de l'évolution de l'une parmi une résistance du circuit résistif ou la température $T1$, $T2$ de la mono-sonde ait été atteint. L'atteinte du régime stationnaire est le cas échéant détecté à l'aide du dispositif de supervision. Les bilans thermiques utilisés pour le calcul des températures $Tf$ et $Tf'$ des fluides $f$ et $f'$ et des résistances thermiques $R$ et $R'$ reposant sur l'hypothèse d'un régime stationnaire de l'évolution en température de chaque mono-sonde, ce calcul s'en trouve fiabilisé ;

- chacune des différences entre les intensités des courants électriques alimentant les circuits résistifs est paramétrée de sorte à induire une différence de températures $T2(t1)-T1(t1)$ et $T2(t2)-T2(t1)$ entre les mono-sondes perceptible par le dispositif de mesure comme une différence entre les mesures de tension, et éventuellement de courant électrique ;

- pour l'une des mono-sondes, l'intensité du courant électrique alimentant le circuit résistif correspondant est paramétrée de sorte à induire une évolution de température nulle de la mono-sonde ;

- chacune des différences entre les intensités des courants électriques alimentant les circuits résistifs est paramétrée de sorte à ne pas modifier significativement les températures $Tf$ et $Tf'$ des fluides $f$ et $f'$. L'on s'assure ainsi d'une part que les calculs des températures $T1(t1)$, $T2(t1)$, $T1(t2)$ et $T2(t2)$ des mono-sondes ne seront pas significativement entachés d'une erreur liée aux imprécisions de mesure du dispositif de mesure et que la mise en oeuvre du procédé d'évaluation n'influe pas sur les conditions de fonctionnement de l'échangeur de chaleur ;

- la différence entre les intensités des courants électriques alimentant les circuits résistifs à compter du deuxième instant $t2$ est paramétrée de sorte à être différente de la différence entre les intensités des courants électriques alimentant les circuits résistifs à compter du premier instant $t1$ ;

- les instants $t1$ et $t2$ sont choisis suffisamment proches dans le temps pour pouvoir négliger une variation des résistances thermiques $R$ et $R'$ de chaque côté de la paroi. L'on s'assure ainsi que les conditions de fonctionnement de l'échangeur de chaleur sont stables pendant leur évaluation ;

- Le procédé peut comprendre en outre l'étape suivante : calculer au moins l'une parmi la résistance d'encrassement $Re$ du premier côté de la paroi et la résistance d'encrassement $R'e$ du second côté de la paroi, en fonction de l'une respective parmi la résistance de convection $Rcv$ du premier côté de la paroi et la résistance de convection $R'cv$ du second côté de la paroi. En faisant l'hypothèse que les régimes hydrauliques de l'échangeur de chaleur, au moins au niveau où est disposée la bi-sonde, sont stables dans le temps, autrement dit que les valeurs des résistances de convection $Rcv$ et $R'cv$ ne varient pas, par exemple par rapport à des valeurs nominales connues, il est possible d'évaluer les résistances d'encrassement *Re* et *R'e* de chaque côté de la paroi. Il est dès lors possible de calculer au moins l'une parmi l'épaisseur de l'encrassement du premier côté de la paroi et l'épaisseur de l'encrassement du second côté de la paroi, en fonction de l'une respective parmi la résistance d'encrassement *Re* du premier côté de la paroi et la résistance d'encrassement *R'e* du second côté de la paroi et de l'une respective parmi une conductivité thermique de l'encrassement du premier côté de la paroi et une conductivité thermique de l'encrassement du second côté de la paroi. Connaissant la nature des encrassements susceptibles de se former de chaque côté de la paroi, et donc les conductivités thermiques de ceux-ci, il est ainsi possible d'évaluer les épaisseurs des encrassements de chaque côté de la paroi ;

- les étapes d'alimentation, de mesure et de calcul de température des mono-sondes peuvent être répétées à compter de deux instants *t3* et *t4* différents entre eux et ultérieurs aux instants *t1* et *t2*, de sorte que le dépassement d'une valeur seuil prédéterminée par l'une au moins parmi :

  ◦ une différence entre les résistances thermiques *R* calculées, et
  ◦ une différence entre les résistances thermiques *R'* calculées,

  soit représentatif d'une évolution, et éventuellement d'une dégradation, des conditions de fonctionnement de l'échangeur de chaleur et le cas échéant permette une prise de décision quant à la réalisation d'une opération de remise en état ou de remplacement de la paroi, voire de l'échangeur de chaleur.

On entend par « circuit résistif » un chemin ou une piste de conduction électrique allant d'un point à un autre, par exemple d'un connecteur à un autre ou d'une borne à une autre, en présentant de préférence des sinuosités de façon à couvrir, de préférence en grande partie et de manière la plus homogène possible, une surface généralement plane.
Le mot « diélectrique » qualifie un matériau dont la conductivité électrique est suffisamment faible dans l'application donnée pour servir d'isolant électrique.
On entend par « encapsulant » le revêtement résultant d'une opération d'encapsulation consistant à enrober au moins partiellement un objet pour l'isoler électriquement et éventuellement le protéger.
On entend par « conforme » la qualité géométrique d'une couche qui présente une même épaisseur malgré des changements de direction de couche, par exemple au niveau de flancs d'une sonde de température.
On entend par un élément « à base » d'un matériau A, un élément comprenant ce matériau A et éventuellement d'autres matériaux.
On entend par « courant électrique » un déplacement d'ensemble de porteurs de charges électriques, généralement des électrons, au sein d'un matériau conducteur. Le courant électrique est défini par un ensemble de paramètres parmi lesquels l'intensité, la tension et la puissance.
On entend par « matériau électriquement conducteur thermosensible » un matériau électriquement conducteur, tel qu'un métal, dont la résistance varie avec la température selon une loi d'évolution propre au matériau électriquement conducteur. Dans le cadre de l'invention, un circuit résistif 11, 21 à base d'un tel matériau, constitue en partie une mono-sonde 1, 2 dont la température varie en fonction de la résistance du circuit résistif 11, 21 selon la loi d'évolution *ad hoc.*

$$T = T_0 + \frac{\frac{R_T}{R_0} - 1}{\alpha}$$

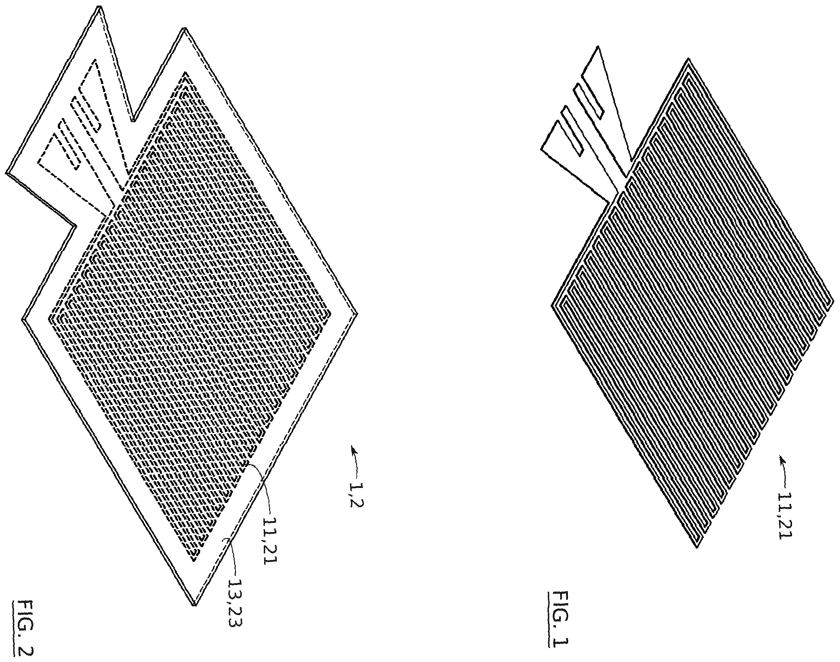

La loi d'évolution s'écrit généralement sous la forme où, lorsqu'on l'applique dans le cadre de l'invention, $T_0$ est une température de référence (en °C), *T* est la température (en °C) de la mono-sonde 1, 2, $R_T$ et $R_0$ sont les résistances électriques (en ohm) du circuit résistif 11, 21 respectivement à la température *T* de la mono-sonde 1, 2 et à la température $T_0$, et $\alpha$ est une constante (en °C$^{-1}$) appelée coefficient thermique et définie dans la norme relative au matériau considéré.
Une bi-sonde 0 de température selon le premier aspect de l'invention est décrite ci-dessous en référence aux figures 1 à 5.
Chaque bi-sonde 0 comprend deux mono-sondes 1, 2 et une couche 3 à base d'un matériau thermiquement isolant. La couche 3 est intercalée entre les deux mono-sondes 1, 2.
Chaque mono-sonde 1,2 comprend un circuit résistif 11, 21 par exemple tel qu'illustré sur la figure 1. Chaque circuit résistif 11, 21 est mis en forme de manière à maximiser la surface développée et à occasionner un dépôt de puissance le plus homogène possible. A cette fin et comme illustré sur la figure 1, chaque circuit résistif 11, 21 peut prendre la forme d'un serpentin de manière à faire tenir une grande longueur de piste de conduction électrique sur une surface de dimensions limitées. Chaque circuit résistif 11, 21 peut prendre d'autres formes, par exemple une forme en spirale. La largeur de la piste est typiquement comprise entre 10 µm et 1 mm et est par exemple égale à 140 µm. L'épaisseur de la piste est typiquement comprise entre 5 µm et 30 µm et est par exemple égale à 10 µm.
Chaque circuit résistif 11, 21 est à base d'un matériau électriquement conducteur thermosensible. Par exemple, chaque circuit résistif 11, 21 est à base d'un métal thermosensible, choisi par exemple parmi le nickel, le platine, le tungstène, le cuivre et tout alliage à base de ces métaux, car tous possèdent la propriété d'avoir un coefficient thermique $\alpha$ (en °C$^{-1}$) élevé, pour pouvoir être mesurée avec des dispositifs de mesures de courant 20 conventionnels. D'autres types de métaux peuvent être utilisés, si ceux-ci présentent un coefficient thermique suffisamment élevé.

Selon la loi d'évolution *ad hoc,* la résistance $R_T$ de chaque circuit résistif 11, 21 peut être convertie en température $T$, en connaissant les caractéristiques de thermo-sensibilité $\alpha$, $T_0$ et $R_0$ du métal constitutif du circuit résistif 11, 21. La résistance $R_T$ du circuit résistif 11, 21 peut être déterminée en connaissant au moins deux paramètres parmi la puissance $P,$ l'intensité $I$ et la tension $U$ du courant électrique circulant dans le circuit résistif 11, 21. La sensibilité thermique de chaque mono-sonde 1, 2 s'exprime en °C/W ; elle dépend de son environnement thermique. La sensibilité thermique de chaque mono-sonde 1, 2 peut être typiquement d'environ 1°C/W, ce qui signifie que la température de chaque mono-sonde 1, 2 s'élève de 1°C pour une puissance appliquée de 1 W.

Que le courant électrique circulant dans un circuit résistif soit continu ou alternatif, différents dispositifs de mesure de courant électrique 20, tels qu'un dispositif de mesure de tension (voltmètre), un dispositif de mesure d'intensité (ampèremètre) ou un dispositif de mesure de puissance peuvent être utilisés pour calculer la tension, l'intensité ou la puissance respectivement du courant électrique circulant dans le circuit résistif 11, 21. Le dispositif de mesure 20 utilisé peut être choisi pour mesurer le paramètre non imposé, et donc non connu, par le dispositif d'alimentation 10 qui de façon corrélée peut être un dispositif d'alimentation en tension ou en intensité.

Comme illustré sur la figure 2, chaque circuit résistif 11, 21 peut être encapsulé dans un encapsulant 13, 23. L'encapsulant 13, 23 peut enrober complètement le circuit résistif 11, 21, ou en partie seulement. L'encapsulant 13, 23 peut être appliqué par lamination d'un film, ou de deux films, d'un côté ou des deux côtés du circuit résistif 11, 21, respectivement. En alternative ou en combinaison, le circuit résistif 11, 21 peut être imprimé ou déposé directement sur un film d'encapsulant 13, 23. L'encapsulant 13, 23 est à base d'un matériau diélectrique, tel qu'un polymère. Ce polymère peut être un polyimide, tel que du Kapton®. Un film en Kapton® peut présenter par exemple des dimensions de 30 mm x 60 mm x 25 à 50 $\mu$m. Les dimensions et la forme des films, et donc de l'encapsulant 13, 23, peuvent être adaptées à la surface dans laquelle s'inscrit le circuit résistif 11, 21. L'encapsulant 13, 23 joue le rôle de protection et d'isolation électrique du circuit résistif 11, 21. L'encapsulant 13, 23 est de préférence propre à résister aux températures auxquelles la bi-sonde 0 selon l'invention est destinée à être soumise. Si ces températures sont élevées, par exemple supérieures à 200°C, voire de l'ordre de 350°C pour des applications au secteur pétrolier notamment, les matériaux constituant la bi-sonde 0 peuvent être adaptés, et notamment l'encapsulant 13, 23 est de préférence un matériau thermostable.

Chaque circuit résistif 11, 21 et son encapsulant 13, 23 forment ainsi une mono-sonde 1, 2. Chaque mono-sonde 1, 2 couvre typiquement une surface de forme libre, allant de un à quelques cm$^2$, adaptable à la zone de la paroi 40 de l'échangeur de chaleur sur laquelle elle est destinée à être disposée. Chaque mono-sonde 1, 2 est ainsi de faible épaisseur ce qui lui assure une certaine flexibilité et donc une adaptation facilitée à presque toute forme de support. En outre, il est dès lors possible de négliger, en bonne approximation, les pertes thermiques par les flancs de la mono-sonde 1, 2. Ainsi, l'invention n'est nullement limitée aux exemples illustrés sur les figures 6 et 7 où la paroi 40 est plane ; la paroi 40 peut prendre toute forme, et par exemple peut être refermée sur elle-même, par exemple de sorte à former un tube.

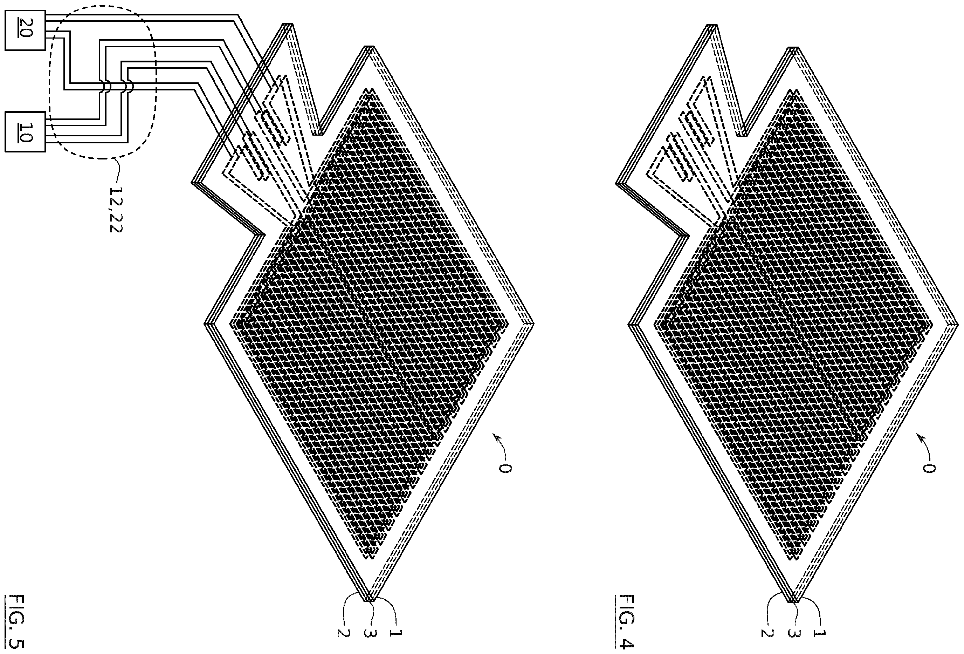

Chaque mono-sonde 1, 2 a deux fonctions : celle de dissipateur à effet Joule et celle de mesure résistive de température. A cette fin, et comme illustré sur la figure 5, chaque mono-sonde 1, 2 peut être câblée avec quatre fils 12, 22, le cas échéant à travers l'encapsulant 13, 23 : deux fils pour l'alimentation en courant électrique et deux fils pour la mesure de tension aux bornes du circuit résistif 11, 21 correspondant, les deux fils pour la mesure de tension étant disposés en parallèle des deux fils pour l'alimentation en courant électrique.

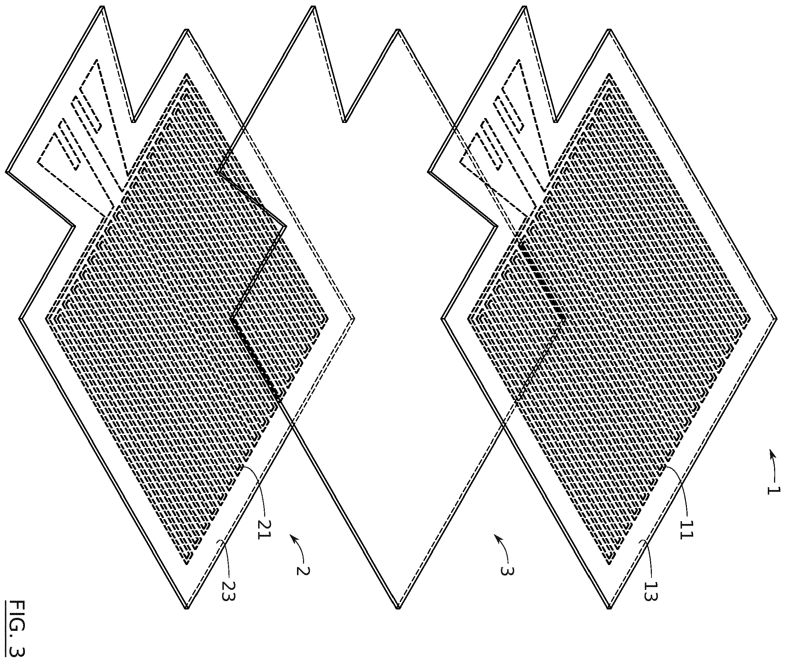

Comme introduit plus haut et comme illustré sur les figures 3 et 4, chaque bi-sonde 0 comprend en outre la couche 3 à base d'un matériau isolant thermique. La couche 3 est intercalée entre les deux mono-sondes 1, 2 de la bi-sonde 0, par exemple par collage. Le collage d'une mono-sonde 1, 2 sur la couche 3 peut nécessiter un adhésif, par exemple adapté à un collage de la couche 3 sur un film polyimide constituant en partie l'encapsulant 13, 23 de chaque mono-sonde 1, 2. La couche 3 est d'une surface égale ou supérieure à celle de chaque mono-sonde 1, 2. La couche 3 crée une résistance thermique $R_{TH}$ entre les deux mono-sondes 1, 2. Cette résistance thermique $R_{TH}$ est fonction de l'épaisseur e et de la conductivité thermique $\lambda$ du matériau thermiquement isolant à base duquel est constituée la couche 3 : $R_{TH} = \lambda/e.$ La résistance thermique $R_{TH}$ peut déterminer, à elle seule et/ou en bonne approximation, la résistance thermique $Rs$ de la bi-sonde 0. Toutefois, la résistance thermique $Rs$ de chaque bi-sonde 0 peut également être caractérisée par des étalonnages en chauffant alternativement une mono-sonde 1, 2, puis l'autre 2, 1, pour établir les relations entre les flux thermiques créés (qui sont connus par calcul) et les écarts d'évolution de température créés entre les deux mono-sondes 1, 2 (qui sont mesurés). Une telle caractérisation est notamment envisagée lorsque la bi-sonde 0 est placée entre deux corps matériaux de résistivités connues et très différentes. La bi-sonde 0 présente ainsi une résistance thermique $Rs$ fonction au moins de l'épaisseur e et de la conductivité thermique $\lambda$ de la couche 3 intercalée entre les deux mono-sondes 1,2.

Ainsi, les températures d'équilibre des mono-sondes 1, 2 de la bi-sonde 0 peuvent être différentes, voire indépendantes, l'une de l'autre, en particulier lorsque l'on applique des intensités électriques différentes aux circuits résistifs 11, 21. De la sorte, la bi-sonde 0 permet d'associer des flux thermiques la traversant à des écarts de température, ou à des écarts d'évolution de température, entre les deux mono-sondes 1,2.

Comme illustré sur la figure 5, chaque circuit résistif 11, 21 est destiné à être lié, en particulier depuis sa paire de connecteurs et par liaisons filaires 12, 22, et le cas échéant à travers l'encapsulant 13, 23, d'une part au dispositif d'alimentation 10, d'autre part au dispositif de mesure 20. Le dispositif d'alimentation électrique 10 permet l'alimentation électrique indépendante et coordonnée, par exemple en courant continu, de chacune des mono-sondes 1, 2. Le dispositif de mesure 20 permet des mesures indépendantes de la tension aux bornes du circuit résistif 11, 21 de chacune des mono-sondes 1, 2, et éventuellement courant électrique dans le circuit résistif 11, 21 de chacune des mono-sondes 1, 2. L'indépendance de l'alimentation signifie qu'il est possible de déposer des puissances variables et différentes en fonction du temps dans chaque circuit résistif 11, 21 de chacune des mono-sondes 1, 2. L'indépendance des mesures de tension, et éventuellement de courant, signifie qu'il est possible de mesurer la tension, et éventuellement le courant, et/ou l'évolution de la tension, et éventuellement l'évolution du courant, et dès lors de calculer la température et/ou l'évolution de la température, d'une mono-sonde 1, 2 indépendamment de la température et/ou de l'évolution de la température de l'autre mono-sonde 2, 1. La coordination de l'alimentation signifie qu'il est possible d'appliquer des consignes de pilotage de l'alimentation de chaque mono-sonde 1, 2 en fonction de l'alimentation de l'autre mono-sonde 2, 1 selon des stratégies déterminées. Comme mentionné plus haut, le dispositif de mesure 20 utilisé peut être choisi pour mesurer le paramètre non imposé, et donc non connu, par le dispositif d'alimentation 10. Par exemple, le dispositif d'alimentation 10 est un dispositif d'alimentation en intensité et impose donc une valeur d'intensité du courant dans le circuit résistif 11, 21 qu'il alimente et le dispositif de mesure 20 est un voltmètre mesurant la tension aux bornes du circuit résistif 11, 21, de sorte que la loi d'ohm permette de remonter à la résistance $R_T$ du circuit résistif 11, 21, puis remonter, via la loi d'évolution *ad hoc*, à la température *T1*, *T2* de la mono-sonde 1, 2 comprenant le circuit résistif 11, 21. En alternative ou en complément, l'intensité dans chaque circuit résistif 11, 21 peut également être mesurée par le dispositif de mesure 20. Ainsi, le procédé 100 résiste à une erreur qui serait liée à l'alimentation en intensité par le dispositif d'alimentation 10 ou à une erreur dans la communication au dispositif de supervision 30 de la valeur d'intensité du courant déposé dans chaque circuit résistif 11, 21 par le dispositif d'alimentation 20.

L'indépendance et/ou la coordination des alimentations et des mesures, ainsi que certains au moins des différents calculs du procédé selon l'invention, peuvent être assurés par un dispositif de supervision 30 (illustré sur la figure 6) du dispositif d'alimentation 10 et du dispositif de mesure 20. A cette fin, le dispositif de supervision 30 peut comprendre des moyens de traitement numérique, tel qu'un micro-processeur ou micro-contrôleur, ou un dispositif de traitement analogique. Il peut notamment commander les mesures de courant et/ou les calculs de température *T1*, *T2* de chaque mono-sonde 1, 2 de façon continue ou échantillonnée, par exemple avec une vitesse d'échantillonnage comprise entre une et dix mesures par seconde. Ainsi, le dispositif de supervision 30 peut être configuré en outre pour détecter qu'un régime stationnaire a été atteint dans l'évolution en résistance ou en température de chaque mono-sonde 1, 2 vers une résistance ou une température d'équilibre, respectivement. Le régime stationnaire peut être considéré comme atteint lorsqu'un écart-type calculé par le dispositif de supervision 30 sur les valeurs de résistance ou de température *T1*, *T2* passe sous une valeur seuil prédéfinie. Dans le contexte de l'invention, les températures d'équilibre de chaque mono-sonde 1, 2 dépendent de l'environnement thermique de chaque mono-sonde 1, 2, et dépendent au moins des températures *Tf* et *Tf'* des fluides *f* et *f'* circulant de part et d'autre de la paroi 40 de l'échangeur thermique.

Deux au moins parmi les dispositifs d'alimentation 10, de mesure 20 et de supervision 30 peuvent être intégrés ensemble de façon à ne former qu'un dispositif remplissant les fonctions de chacun des dispositifs intégrés.

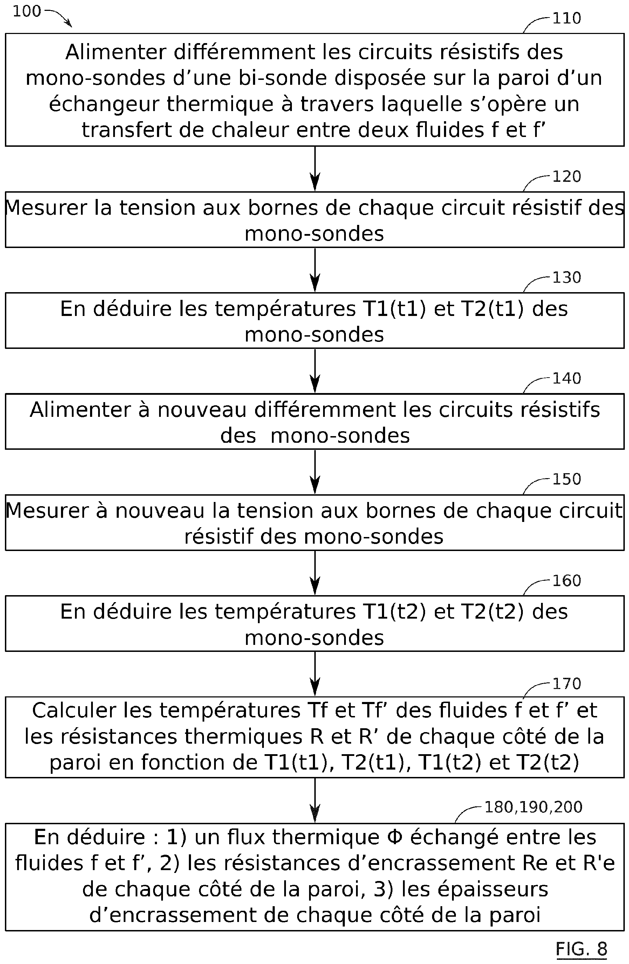

Le procédé 100 d'évaluation d'au moins une condition de fonctionnement d'un échangeur de chaleur selon le troisième aspect de l'invention est décrit ci-dessous en référence aux figures 7 et 8 annexées.

Pour connaître l'environnement thermique immédiat de la bi-sonde 0 et de la paroi 40 sur laquelle la bi-sonde 0 est fixée, il est utile de déterminer différents paramètres caractérisant localement cet environnement. Parmi ces paramètres, l'on compte ceux relatifs aux régimes de convection se produisant de chaque côté de la paroi 40, la résistance thermique *Rp* de la paroi 40, la résistance thermique *Rs* de la bi-sonde 0, les résistances thermiques d'encrassement *Re* et *R'e* de chaque côté de la paroi 40, les températures *Tf, Tf'* des fluides *f* et *f'* s'écoulant de chaque côté de la paroi 40, et le flux thermique $\Phi$ traversant la paroi 40. Les régimes de convection se produisant de chaque côté de la paroi 40 sont quantifiables en résistances thermiques de convection *Rcv* et *R'cv* de chaque côté de la paroi 40. La résistance thermique *Rp* de la paroi 40 peut être supposée invariante en temps et être une résistance thermique de référence ; toutefois, comme discuté plus bas, le procédé peut avantageusement être utilisé pour diagnostiquer une dégradation de la paroi résultant en une modification de sa résistance thermique *Rp* notamment par rapport à sa résistance thermique de référence. Comme discuté plus haut, la résistance thermique *Rs* de la bi-sonde 0 peut en bonne approximation être considérée égale à la résistance thermique $R_{TH}$ de la couche 3 isolant thermiquement les mono-sondes 1, 2 entre elles ; en alternative, la résistance thermique *Rs* de la bi-sonde 0 peut être mesurée.

Pour évaluer les conditions de fonctionnement d'un échangeur de chaleur, la bi-sonde 0 de température est de préférence disposée, comme illustré sur la figure 7, sur la paroi 40 de l'échangeur de chaleur. La bi-sonde 0 est par exemple disposée à un emplacement de la paroi 40 à travers laquelle s'opère un transfert de chaleur, de préférence à destination fonctionnelle, entre les deux fluides *f* et *f'* circulant de part et d'autre de la paroi 40 et sur laquelle est susceptible de se déposer un encrassement 50, 50'. De la sorte, les conditions de fonctionnement, éventuellement dégradées, de l'échangeur de chaleur peuvent être évaluées et cette évaluation peut permettre une prise de décision quant à la réalisation d'une opération de remise en état ou de remplacement de la paroi 40, voire de l'échangeur de chaleur.

La bi-sonde 0 est de préférence disposée sur la paroi 40 lorsque celle-ci n'est pas recouverte d'un encrassement 50, 50' ou sur une partie non-encrassée de la paroi 40, de sorte d'être directement en contact avec la paroi 40. La bi-sonde 0 peut indifféremment être disposée d'un côté ou de l'autre de la paroi 40. Un encrassement 50, 50' peut indifféremment être destiné à se former du côté de la paroi 40 où la bi-sonde 0 est disposée, de l'autre côté, ou des deux côtés de la paroi 40. L'encrassement 50, 50' peut être destiné à se former au moins en partie sur la bi-sonde 0 et s'étendre de toute part autour de celle-ci le long de la paroi 40. Comme illustré sur la figure 7, lorsque l'encrassement 50 se forme du côté de la paroi 40 où la bi-sonde 0 est disposée, cet encrassement 50 peut être conforme. L'encrassement 50 formé d'un côté de la paroi 40 peut être d'une nature différente de l'encrassement 50' formé de l'autre côté de la paroi 40. La nature et/ou l'épaisseur des encrassements 50, 50' peut dépendre de la nature des fluides *f* et *f'*, respectivement, ainsi que de leur températures *Tf* et *Tf'*. La nature et/ou l'épaisseur des encrassements 50, 50' peut également dépendre de la géométrie et/ou de la nature et/ou de l'état de surface de la paroi 40. La nature et/ou l'épaisseur des encrassements 50, 50' peut dépendre des régimes d'écoulement des fluides *f* et *f'* circulant de part et d'autre de la paroi 40. Des écoulements à contre-courant des fluides *f* et *f'* sont illustrés sur la figure 7, mais le procédé selon l'invention s'applique également dans d'autres configurations d'écoulements, et notamment pour des écoulements à co-courant. Dans l'exemple illustré sur la figure 7, la bi-sonde 0 est disposée d'un premier côté de la paroi 40 et une première mono-sonde 1 est disposée sur la paroi 40 par l'intermédiaire de l'autre mono-sonde 2 et de la couche 3 intercalée.

Selon un mode de réalisation de l'invention et en référence à la figure 8, le procédé comprend une première série des étapes suivantes, de préférence coordonnées par le dispositif de supervision 30 :

- alimenter 110 les circuits résistifs 11, 21 par des courants d'intensités différentes,
- mesurer 120 la tension aux bornes de chacun des circuits résistifs 11, 21, et éventuellement le courant électrique dans chacun des circuits résistifs 11, 21, puis
- calculer 130 la température *T1(t1)*, *T2(t1)* de chaque mono-sonde 1, 2 au moins en fonction de la mesure 120 de tension aux bornes du circuit résistif 11, 21 correspondant, et éventuellement de la mesure 120 du courant électrique dans le circuit résistif 11, 21 correspondant.

Cette première série d'étapes 110 à 130 est réalisée à compter d'un premier instant *t1*, puis une deuxième série d'étapes correspondantes 140 à 160, de préférence à nouveau coordonnées par le dispositif de supervision 30, est réalisée à compter d'un deuxième instant t2. Cette deuxième série d'étapes 140 à 160 permet de calculer 160 la température *T1(t2)*, *T2(t2)* de chaque mono-sonde 1, 2. La deuxième série d'étapes n'est réalisée qu'une fois la première série d'étapes achevée, ou du moins qu'une fois les mesures 120 achevées. La température *Ti(tj)*, avec *i* et *j* = 1 ou 2, est la température de la mono-sonde i déterminée à compter de l'instant tj. Les calculs 130, 160 de chaque température *Ti(tj)* peut impliquer le calcul intermédiaire de chaque résistance électrique *Ri(tj)* correspondante selon la loi d'évolution *ad hoc* évoquée plus haut, où la résistance *Ri(tj)*, avec *i* et *j* = 1 ou 2, est la résistance de la mono-sonde *i* déterminée à compter de l'instant *tj*.

Le procédé 100 selon le mode de réalisation illustré sur la figure 8 comprend alors en outre au moins l'étape suivante : calculer 170, en fonction de la résistance thermique *Rs* de la bi-sonde 0, de la résistance thermique *Rp* de la paroi 40 et des températures *T1(t1)*, *T2(t1)*, *T1(t2)* et *T2(t2)* des mono-sondes 1, 2, au moins l'une parmi les températures *Tf* et *Tf'* des fluides *f* et *f'* et les résistances thermiques *R* et *R'* de chaque côté de la paroi 40.

Un mode de réalisation particulier de l'invention est décrit ci-après en référence à la figure 7. Cette description permet d'expliciter en détails le calcul 170 introduit plus haut, dans un contexte selon lequel le courant électrique alimentant 110, 140 le circuit résistif 11 de la première mono-sonde 1 consiste en une alimentation en intensité et est paramétré de sorte à induire une évolution de température nulle de la première mono-sonde 1. Typiquement, l'intensité du courant électrique alimentant 110, 140 le circuit résistif 11 est alors sensiblement égale à 1 mA. Une telle intensité ou puissance électrique est fournie au circuit résistif 11 pour y induire une différence de tension et pouvoir remonter à ses températures *T1(t1)* et *T1(t2)* par la loi d'ohm et la loi d'évolution *ad hoc*. L'on peut également considérer que la température *T1* n'évolue pas sur la période d'acquisition des températures *T1(t1)* et *T1(t2)*, ce qui permet de considérer que *T1(t2)* = *T1(t1)* et donc de se limiter au calcul d'une seule des températures *T1(t1)* et *T1(t2)*. Il convient donc de considérer que l'une ou l'autre des étapes d'alimentation 110, 140 du circuit résistif 11 peut comprendre l'application d'un courant d'alimentation d'intensité nulle à compter de l'un ou l'autre parmi le premier instant *t1* et le deuxième instant *t2*. Il convient également de considérer que l'une des étapes de mesure de tension 120, 150 aux bornes du circuit résistif 11 peut consister à reprendre le résultat de l'autre des étapes de mesure de tension 150, 120 aux bornes du circuit résistif 11.

Dans ce contexte, lorsque la deuxième mono-sonde 2, dissipe de l'énergie thermique, une élévation de sa température *T2* permet d'établir un équilibre thermique avec son environnement. La différence de température *ΔT* entre la température initiale de la deuxième mono-sonde 2 sans dissipation de puissance et la température d'équilibre *T2(t1)* ou *T2(t2)* avec dissipation de puissance est fonction de l'énergie dissipée et des résistances thermiques de l'environnement. Notamment, si un encrassement 50 et/ou 50' ajoute une résistance thermique *Re* et/ou *R'e* dans l'environnement de la bi-sonde 0, il est possible de la détecter par la modification induite sur la différence de température *ΔT*.

A compter du premier instant *t1,* on dépose 110 une puissance *P2(t1)* dans la deuxième mono-sonde 2. De préférence à l'atteinte du régime thermique stationnaire de l'évolution en température de la deuxième mono-sonde 2, on en calcule 130 la température *T2(t1).*

Puis, à compter du deuxième instant *t2,* on dépose 140 une puissance *P2(t2)* dans la deuxième mono-sonde 2. De préférence à l'atteinte du régime thermique stationnaire de l'évolution en température de la deuxième mono-sonde 2, on en calcule 160 la température *T2(t2).*

La puissance *P2(t2)* n'est pas nécessairement différente de la puissance *P2(t1)*. Les puissances *P2(t1)* et *P2(t2)* ne sont simplement pas appliquées simultanément, mais alternativement. Toutefois, la puissance *P2(t2)* est de préférence différente de la puissance *P2(t1)* ; cela permet de bénéficier pleinement de la robustesse de l'approche analytique sur laquelle repose l'invention et de fiabiliser encore les calculs en s'affranchissant d'une éventuelle imprécision de mesure 120, 150 suite à l'application 110, 140 de l'une ou l'autre des puissances *P2(t1)* et *P2(t2)*. En outre, les puissances *P2(t1)* et *P2(t2)* sont de préférence appliquées 110, 140 de façon suffisamment proche l'une de l'autre dans le temps, soit par exemple à quelques dizaines de secondes d'intervalle, par exemple avec un intervalle inférieur à 60 secondes, plus particulièrement inférieur à 30 secondes et de préférence égal à 10 secondes, pour pouvoir négliger une variation des résistances thermiques *R* et *R'* de chaque côté de la paroi 40. Une limite inférieure de l'intervalle de temps entre les applications successives des puissances *P2(t1)* et *P2(t2)* peut être le temps nécessaire pour atteindre le régime stationnaire de l'évolution en température de chaque circuit résistif 11, 12 ; ce temps étant généralement inférieur à 10 secondes, et par exemple compris entre 2 et 8 secondes.

Les puissances *P2(t1)* et *P2(t2)* sont typiquement comprises entre 1 et 10 W. Elles sont choisies suffisamment faibles pour ne pas remettre en cause l'équilibre thermique général de l'échangeur thermique, et notamment pour ne pas altérer les températures *Tf* et *Tf'* des fluides *f* et *f'*. L'on peut s'en assurer en paramétrant l'alimentation 110, 140 de sorte que la puissance dissipée par la bi-sonde 0 soit de l'ordre de 0,02 % de la puissance thermique échangée à travers la paroi 40 de l'échangeur de chaleur.

La question du niveau de puissance à déposer 110, 140 dans la deuxième mono-sonde 2 a fait l'objet de développements analytiques spécifiques non présentés ici. Cependant, elle peut être traitée de la manière suivante. Les contraintes antagonistes qui s'appliquent sont :

- d'une part la nécessité de ne pas déposer une puissance trop forte qui perturberait le fonctionnement de l'échangeur de chaleur (et notamment modifierait les températures *Tf* et *Tf'* des fluides *f* et *f'*),
- d'autre part la nécessité de déposer une puissance suffisante pour se traduire dans les faits par une modification de la température *T2* de la deuxième mono-sonde 2 suffisante, et donc par un flux thermique $\Phi_2 = \Phi_{2,s} + \Phi_{2,b}$ (Cf. figure 7) suffisant, pour que l'interprétation des mesures de tension 120, 150 soit précise.

On peut alors calculer à l'aide de bilans thermiques au moins un paramètre parmi un couple de paramètres comprenant la température *Tf* du fluide *f* et la résistance thermique *R* d'un côté de la paroi 40 et un couple de paramètres comprenant la température *Tf'* du fluide *f'* et la résistance thermique *R'* de l'autre côté de la paroi 40.

La figure 7 illustre le schéma de principe et la signification des notations employées ci-dessous. On notera que, pour les descriptions données ici, les températures sont données comme températures moyennes de la couche de matériau à laquelle elles se rattachent et que les flux thermiques sont donnés au travers d'interface entre ces couches.

La résistance thermique $R_s$ (en $m^2 \cdot K \cdot W^{-1}$) de la bi-sonde 0 et/ou l'épaisseur *e* (en mètre) et la conductivité thermique $\lambda$ (en $W \cdot m^{-1} \cdot K^{-1}$) de la bi-sonde 0 sont connues. De ces paramètres dépend le flux thermique $\Phi_{2,s}$ (en $W/m^2$) traversant l'interface entre les mono-sondes 1 et 2, à compter de chaque instant *t1* et *t2 :*

$$\Phi2,s(t1) = -\frac{1}{R_s}\big(T1(t1) - T2(t1)\big) = -\frac{\lambda}{e}(T1(t1) - T2(t1)),$$

et

$$\Phi2,s(t2) = -\frac{1}{R_s}\big(T1(t2) - T2(t2)\big) = -\frac{\lambda}{e}(T1(t2) - T2(t2)).$$

On peut également écrire l'expression du flux thermique $\Phi_{2,b}$ (en W/m²) traversant l'interface entre la deuxième mono-sonde 2 et la paroi 40, à compter de chaque instant *t1* et *t2 :*

$$\Phi2, b(t1) = S \cdot P2(t1) - \Phi2, s(t1) = \frac{T2(t1)-Tf'}{R_p+R_s+R'} = c(t1),$$

et

$$\Phi2, b(t2) = S \cdot P2(t2) - \Phi2, s(t2) = \frac{T2(t2)-Tf'}{R_p+R_s+R'} = c(t2),$$

où

$S$ est la surface de la bi-sonde 0 (en m²), *Tf'* (en K) est la température du fluide *f* circulant du second côté de la paroi 40, $R_p$ est la résistance de la paroi 40, et *R'* est la résistance thermique du second côté de la paroi 40.

Ainsi, on en déduit :

$$Tf' = \frac{c(t2)T2(t1)-c(t1)T2(t2)}{c(t2)-c(t1)},$$

et

$$R' = \frac{T2(t1)}{c(t1)} - R_p - R_s - \frac{c(t2)T2(t1)-c(t1)T2(t2)}{c(t1)(c(t2)-c(t1))}.$$

De la même manière, connaissant les relations suivantes :

$$\Phi2, s(t1) = \frac{T1(t1)-Tf}{R_s+R},$$

et

$$\Phi2, s(t2) = \frac{T1(t2)-Tf}{R_s+R},$$

on en déduit *Tf*, la température du fluide *f* circulant du premier côté de la paroi 40, et *R,* la résistance thermique du premier côté de la paroi 40.

Dès lors, il est possible calculer le flux thermique $\Phi$ (en W/m²) traversant la paroi 40 : $\Phi = \frac{Tf-Tf'}{R_p}$. Ce flux pourrait aussi le cas échéant être exprimé sous la forme: $\Phi = \frac{Tf-Tf'}{R+R_p+R'}$.

Le flux thermique $\Phi$ (en W/m²) traversant la paroi 40 peut également être connu via une mesure à puissance déposée P2 nulle. En effet, si P2 est nulle, le flux thermique $\Phi$ est égal au flux $\Phi2, b$, soit $\frac{1}{R_s}\big(T1(t1) - T2(t1)\big).$

Ainsi, les mesures 120, 150 successives avec la bi-sonde 0 permettent d'obtenir les températures *Tf* et *Tf'* des fluides *f* et *f'*, les résistances thermiques *R* et *R'* de chaque côté de la paroi 40, ainsi que le flux thermique $\Phi$ traversant la paroi 40. Du fait que chacune des résistances thermiques *R* et *R'* calculées est proportionnelle à une somme de résistances thermiques de convection et éventuellement d'encrassement : *R = Rcv +Re* et *R' = R'cv+R'e,* le procédé 100 permet de discriminer de quel(s) côté(s) de la paroi 40 un encrassement s'est déposé, par exemple depuis une évaluation nominale ou antérieure des conditions de fonctionnement de l'échangeur de chaleur. Au contraire, en fonctionnant non pas avec une bi-sonde 0, mais avec une seule mono-sonde 1 ou 2, il n'est pas possible de différencier les résistances thermiques $R$ et $R'$ de part et d'autre de la paroi 40, ni d'obtenir les températures $Tf$ et $Tf'$ des fluides $f$ et $f'$.

Les hypothèses faites ci-dessus permettant d'aboutir à ces résultats consistent à supposer que :

- $P2(t1)$ et $P2(t2)$ ne modifient pas les températures $Tf$ et $Tf'$, et que
- $P2(t1)$ et $P2(t2)$ sont appliquées 110, 140 successivement, mais de façon suffisamment proche dans le temps, pour pouvoir négliger la variation des résistances thermiques d'encrassement $Re$ et $R'e$ et l'éventuelle variation des résistances thermiques de convection $Rcv$ ou $R'cv$.

Si on fait l'hypothèse supplémentaire de la connaissance a *priori* des valeurs des résistances thermiques de convection $Rcv$ et $R'cv$, par exemple en supposant qu'elles sont identiques à celles correspondant à des conditions de fonctionnement nominales de l'échangeur de chaleur, on peut déduire, des résistances thermiques $R$ et $R'$ calculées, les résistances d'encrassement $Re$ et $R'e$ de chaque côté de la paroi 40.

Connaissant la nature des encrassements 50, 50' susceptibles de se former de chaque côté de la paroi 40, et donc leurs conductivités thermiques, il est possible d'évaluer les épaisseurs des encrassements, en fonction des résistances d'encrassement $Re$ et $R'e$ de chaque côté de la paroi 40 $\left( Re = \dfrac{e}{\lambda e} \quad, \quad R'e = \dfrac{e'}{\lambda'e} \right.$ où $\lambda e$, $\lambda'e$ sont les conductivités thermiques des couches d'encrassement d'épaisseurs $e$, $e'$). Ainsi, le procédé 100 peut en outre comprendre l'étape suivante: calculer 200 au moins l'une parmi les épaisseurs des encrassements 50, 50', en fonction de l'une respective parmi les résistances d'encrassement $Re$ et $R'e$ de chaque côté de la paroi 40 et de l'une respective parmi les conductivités thermiques des encrassements de chaque côté de la paroi 40.

L'invention n'est pas limitée aux modes de réalisations précédemment décrits et s'étend à tous les modes de réalisation couverts par les revendications.

Par exemple, l'emploi de la bi-sonde 0 tel que décrit ci-dessus, selon lequel on réalise un dépôt 110, 140 de puissance $P2$ dans la mono-sonde 2, permet de déterminer un nombre de quantités d'intérêt pour l'ingénieur ($Tf$, $Tf'$, $R$, $R'$, ...). La plupart des développements analytiques présentés ci-dessus sont fournis dans ce contexte. Un dépôt de puissance dans la mono-sonde 1 conduirait à des développements analytiques similaires, quoique légèrement différents, qui permettraient *in fine* de déterminer les mêmes quantités d'intérêt en faisant les mêmes hypothèses. La formulation de ces développements non présentés ici est jugée relever des compétences ordinaires de l'homme de l'art, au vu des développements analytiques fournis.

Par exemple, les étapes 110 à 130 et 120 à 150 peuvent être répétées à compter de deux instants $t3$ et $t4$ différents entre eux et ultérieurs aux instants $t1$ et $t2$. Chacune des étapes de calcul 170 à 200 peut donc être également répétées. De la sorte, une éventuelle différence entre les résultats de chacun des calculs 170 à 200 peut être représentative d'une évolution, voire d'une dégradation, des conditions de fonctionnement de l'échangeur de chaleur et peut permettre notamment une prise de décision quant à la réalisation d'une opération de remise en état ou de remplacement de la paroi 40, voire de l'échangeur de chaleur. Une répétition des étapes 110 à 170, voire également des étapes 180 à 200, du procédé 100 peuvent être programmées par exemple par intervalles de 10 minutes, de 24 heures, de 1 mois, de 1 an, etc. et/ou par exemple dès une première mise en fonctionnement de l'échangeur thermique et après chaque opération d'entretien et de maintenance de l'échangeur thermique.

Dans ce contexte, un exemple d'application est donné ci-après qui a pour objectif de déterminer si oui ou non la paroi 40 de l'échangeur thermique s'est dégradée entre deux mises en oeuvre successives du procédé 100, par exemple entre une première mise en fonctionnement de l'échangeur thermique et une première opération d'entretien et de maintenance de l'échangeur thermique ou entre deux opérations d'entretien et de maintenance de l'échangeur thermique. Que ce soit lors de la première mise en fonctionnement de l'échangeur thermique ou après une opération d'entretien et de maintenance de l'échangeur thermique, la paroi 40 peut être supposée non recouverte d'encrassements 50, 50', de sorte que les seules résistances thermiques mises en jeu dans le transfert de chaleur à travers la paroi 40 sont celles de la bi-sonde 0, de la paroi 40 et des régimes de convection, à savoir $Rcv$ et $R'cv$. Dans ces conditions et dès lors que la résistance thermique $Rs$ de la bi-sonde 0 n'a pas varié et que les résistances de convection $Rcv$ et $R'cv$ sont connues, une différence entre les résistances thermiques $R$ et $R'$ calculées 170 lors d'une première implémentation du procédé et les résistances thermiques $R$ et $R'$ calculées 170 lors d'une deuxième implémentation du procédé, en fonction d'une même valeur de référence de la résistance thermique $Rp$ de la paroi 40, peut traduire une variation de cette valeur de référence, et donc peut permettre de quantifier une dégradation de la paroi 40, et qui plus est de discriminer de quel(s) côté(s) de la paroi cette dégradation a eu lieu, suivant que la résistance thermique $R$ et/ou la résistance thermique $R'$ a varié.

## EP 3 339 828 B1

**Revendications**

1.  Bi-sonde (0) de température comprenant :

    - deux mono-sondes (1, 2) de température, comprenant chacune un circuit résistif (11, 21) à base d'un matériau électriquement conducteur thermosensible, chaque circuit résistif (11, 21) étant destiné à être lié à un dispositif de mesure de courant électrique (20), et
    - une couche (3) à base d'un matériau thermiquement isolant intercalée entre les mono-sondes (1, 2), de sorte que la bi-sonde (0) présente une résistance thermique Rs connue fonction de l'épaisseur *e* et de la conductivité thermique λ de la couche (3) intercalée,
    la bi-sonde étant **caractérisée en ce que** chaque circuit résistif (11, 21) est en outre destiné à être lié à un dispositif d'alimentation électrique (10),
    de sorte que des températures d'équilibre des mono-sondes (1, 2) puissent être différentes l'une de l'autre, lorsque l'on applique des courants électriques d'intensités différentes aux circuits résistifs.

2.  Bi-sonde (0) de température selon la revendication précédente, dans laquelle chaque mono-sonde (1, 2) comprend en outre au moins un encapsulant (13, 23) enrobant au moins en partie le circuit résistif (11, 21), l'encapsulant (13, 23) étant à base d'un matériau diélectrique.

3.  Système (1000) d'évaluation d'au moins une condition de fonctionnement d'un échangeur de chaleur, comprenant :

    - au moins une bi-sonde (0) de température comprenant :

        ◦ deux mono-sondes (1, 2) de température comprenant chacune un circuit résistif (11, 21) à base d'un matériau électriquement conducteur thermosensible, et
        ◦ une couche (3) à base d'un matériau thermiquement isolant intercalée entre les mono-sondes (1, 2),

    de sorte que la bi-sonde (0) présente une résistance thermique *Rs* connue,
    - une paroi (40) d'un échangeur de chaleur à travers laquelle un transfert thermique est destiné à s'opérer entre deux fluides *f* et *f'* circulant de part et d'autre de la paroi (40) et sur laquelle est susceptible de se déposer un encrassement (50),
    - un dispositif d'alimentation électrique (10),
    - un dispositif de mesure de courant électrique (20), et
    - un dispositif de supervision (30) du dispositif d'alimentation (10) et du dispositif de mesure (20),
    la bi-sonde (0) étant disposée sur l'un parmi un premier côté et un second côté de la paroi (40) présentant une résistance thermique *Rp* de référence,
    le système étant **caractérisé en ce que** le dispositif d'alimentation électrique (20) est configuré pour alimenter chaque circuit résistif (11, 21) de la bi-sonde (0) et **en ce que** le dispositif de mesure de courant électrique (20) est configuré pour mesurer le courant électrique circulant dans chaque circuit résistif (11, 21) de la bi-sonde (0),
    de sorte que des températures d'équilibre des mono-sondes (1, 2) puissent être différentes l'une de l'autre, lorsque l'on applique des courants électriques d'intensités différentes aux circuits résistifs, et puissent être mesurées indépendamment l'une de l'autre.

4.  Procédé (100) d'évaluation d'au moins une condition de fonctionnement d'un échangeur de chaleur mettant en oeuvre un système (1000) selon la revendication précédente, comprenant au moins les étapes suivantes, de préférence coordonnées par le dispositif de supervision (30) :

    à compter d'un premier instant *t1* :

        - alimenter (110) les circuits résistifs (11, 21) avec des courants électriques d'intensités différentes,
        - mesurer (120) la tension aux bornes de chacun des circuits résistifs (11, 21), et éventuellement le courant électrique dans chacun des circuits résistifs (11, 21), puis
        - calculer (130) la température *T1(t1), T2(t1)* de chaque mono-sonde (1, 2) au moins en fonction de la mesure de tension aux bornes du circuit résistif (11, 21) correspondant, et

    à compter d'un deuxième instant *t2,* différent du premier instant *t1* :

        - alimenter (140) les circuits résistifs (11, 21) avec des courants électriques d'intensités différentes,

- mesurer (150) la tension aux bornes de chacun des circuits résistifs (11, 21), et éventuellement le courant électrique dans chacun des circuits résistifs (11, 21), puis
- calculer (160) la température *T1(t2), T2(t2)* de chaque mono-sonde (1, 2) au moins en fonction de la mesure de tension aux bornes du circuit résistif (11, 21) correspondant,

le procédé (100) comprenant en outre au moins l'étape suivante :

- calculer (170), en fonction de la résistance thermique *Rs* de la bi-sonde (0), de la résistance thermique *Rp* de la paroi (40) et des températures *T1(t1), T2(t1), T1(t2)* et *T2(t2)* des mono-sondes (1, 2), au moins l'une des conditions de fonctionnement suivantes : la température *Tf* du fluide *f* du premier côté de la paroi (40), la résistance thermique *R* du premier côté de la paroi (40), la température *Tf'* du fluide *f'* du second côté de la paroi (40) et la résistance thermique *R'* du second côté de la paroi (40).

5.  Procédé (100) selon la revendication précédente, comprenant en outre l'étape suivante : calculer (180) un flux thermique Φ échangé entre les fluides *f* et *f'* à travers la paroi (40) en fonction des températures *Tf* et *Tf'* des fluides *f* et *f'* et des résistances thermiques *R* et *R'*.

6.  Procédé (100) selon l'une quelconque des revendications 4 et 5, dans lequel chaque mesure (120, 150) de tension, et éventuellement de courant électrique, est effectuée après qu'un régime stationnaire de l'évolution de l'une parmi une résistance du circuit résistif (11, 21) ou la température *T1, T2* de la mono-sonde (1, 2) ait été atteint.

7.  Procédé (100) selon l'une quelconque des revendications 4 à 6, dans lequel chacune des différences entre les intensités des courants électriques alimentant (110, 140) les circuits résistifs (11, 21) est paramétrée de sorte à induire une différence de températures *T2(t1)-T1(t1)* et *T2(t2)-T2(t1)* entre les mono-sondes (1, 2) perceptible par le dispositif de mesure (20) comme une différence entre les mesures (120, 150) de tension, et éventuellement de courant électrique.

8.  Procédé (100) selon l'une quelconque des revendications 4 à 7, dans lequel, pour l'une des mono-sondes (1, 2), l'intensité du courant électrique alimentant (110, 140) le circuit résistif (11, 21) correspondant est paramétrée de sorte à induire une évolution de température nulle de la mono-sonde (1, 2).

9.  Procédé (100) selon l'une quelconque des revendications 4 à 8, dans lequel chacune des différences entre les intensités des courants électriques alimentant (110, 140) les circuits résistifs (11, 21) est paramétrée de sorte à ne pas modifier les températures *Tf* et *Tf'* des fluides *f* et *f'*.

10. Procédé (100) selon l'une quelconque des revendications 4 à 9, dans lequel la différence entre les intensités des courants électriques alimentant (140) les circuits résistifs (11, 21) à compter du deuxième instant *t2* est paramétrée de sorte à être différente de la différence entre les intensités des courants électriques alimentant (110) les circuits résistifs (11, 21) à compter du premier instant *t1.*

11. Procédé (100) selon l'une quelconque des revendications 4 à 10, dans lequel les instants *t1* et *t2* sont choisis suffisamment proches dans le temps pour pouvoir négliger au moins une variation des résistances thermiques *R* et *R'* de chaque côté de la paroi (40).

12. Procédé (100) selon l'une quelconque des revendications 4 à 11, comprenant en outre l'étape suivante: calculer (190) au moins l'une parmi la résistance d'encrassement *Re* du premier côté de la paroi (40) et la résistance d'encrassement *R'e* du second côté de la paroi (40), en fonction de l'une respective parmi la résistance de convection *Rcv* du premier côté de la paroi (40) et la résistance de convection *R'cv* du second côté de la paroi (40).

13. Procédé (100) selon la revendication précédente, comprenant en outre l'étape suivante : calculer (200) au moins l'une parmi l'épaisseur d'encrassement du premier côté de la paroi (40) et l'épaisseur d'encrassement du second côté de la paroi (40), en fonction de l'une respective parmi la résistance d'encrassement *Re* du premier côté de la paroi (40) et la résistance d'encrassement *R'e* du second côté de la paroi (40) et de l'une respective parmi la conductivité thermique de l'encrassement (50) du premier côté de la paroi (40) et la conductivité thermique de l'encrassement (50') du second côté de la paroi (40).

14. Procédé (100) selon l'une quelconque des revendications 4 à 13, dans lequel les étapes d'alimentation (110, 140), de mesure (120, 150) et de calcul de température (130, 160) peuvent être répétées à compter de deux instants *t3* et *t4* différents entre eux et ultérieurs aux instants *t1* et *t2,* de sorte que le dépassement d'une valeur seuil prédéterminée par l'une au moins parmi :

- une différence entre les résistances thermiques *R* calculées (170), et
- une différence entre les résistances thermiques *R'* calculées (170),
soit représentatif d'une évolution, et éventuellement d'une dégradation, des conditions de fonctionnement de l'échangeur de chaleur et le cas échéant permette une prise de décision quant à la réalisation d'une opération de remise en état ou de remplacement de la paroi (40), voire de l'échangeur de chaleur.

15. Produit programme d'ordinateur comprenant des instructions, qui, lorsqu'elles sont interprétées et exécutées par au moins un processeur effectuent les étapes de calcul (130), (160) et (170) du procédé (100) selon l'une quelconque des revendications 4 à 14.

**Patentansprüche**

1. Temperatur-Doppelsonde (0), umfassend:

 - zwei Temperatur-Monosonden (1, 2), die jeweils eine Widerstandsschaltung (11, 21) auf der Basis eines elektrisch leitfähigen wärmeempfindlichen Materials umfassen, wobei jede Widerstandsschaltung (11, 21) dazu bestimmt ist, mit einer Vorrichtung zum Messen von elektrischem Strom (20) verbunden zu werden, und
 - eine Schicht (3) auf der Basis eines wärmeisolierenden Materials, die zwischen den Monosonden (1, 2) angeordnet ist,

 so dass die Doppelsonde (0) einen bekannten Wärmewiderstand Rs aufweist, der von der Dicke e und der Wärmeleitfähigkeit λ der dazwischen angeordneten Schicht (3) abhängig ist, wobei die Doppelsonde **dadurch gekennzeichnet ist, dass** jede Widerstandsschaltung (11, 21) ferner dazu bestimmt ist, mit einer Stromversorgungsvorrichtung (10) verbunden zu werden, so dass Gleichgewichtstemperaturen der Monosonden (1, 2) voneinander verschieden sein können, wenn man elektrische Ströme unterschiedlicher Stärken an die Widerstandsschaltungen anlegt.

2. Temperatur-Doppelsonde (0) nach dem vorhergehenden Anspruch, bei der jede Monosonde (1, 2) ferner mindestens ein Einkapselungsmittel (13, 23) umfasst, das die Widerstandsschaltung (11, 21) zumindest teilweise umhüllt, wobei das Einkapselungsmittel (13, 23) auf der Basis eines dielektrischen Materials ist.

3. System (1000) zur Einschätzung mindestens einer Betriebsbedingung eines Wärmetauschers, umfassend:

 - mindestens eine Temperatur-Doppelsonde (0), umfassend:

 ◦ zwei Temperatur-Monosonden (1, 2), die jeweils eine Widerstandsschaltung (11, 21) auf der Basis eines elektrisch leitfähigen wärmeempfindlichen Materials umfassen, und
 ◦ eine Schicht (3) auf der Basis eines wärmeisolierenden Materials, die zwischen den Monosonden (1, 2) angeordnet ist,

 so dass die Doppelsonde (0) einen bekannten Wärmewiderstand *Rs* aufweist,
 - eine Wand (40) eines Wärmetauschers, durch die hindurch ein Wärmeübergang zwischen zwei Fluiden *f* und *f'*, die beidseits der Wand (40) zirkulieren, stattfinden soll und an der sich eine Verschmutzung (50) ablagern kann,
 - eine Stromversorgungsvorrichtung (10),
 - eine Vorrichtung zum Messen von elektrischem Strom (20) und
 - eine Vorrichtung zur Überwachung (30) der Versorgungsvorrichtung (10) und der Messvorrichtung (20),
 wobei die Doppelsonde (0) auf einer unter einer ersten Seite und einer zweiten Seite der Wand (40) angeordnet ist, die einen Referenz-Wärmewiderstand *Rp* aufweist,
 wobei das System **dadurch gekennzeichnet ist, dass** die Stromversorgungsvorrichtung (20) dazu konfiguriert ist, jede Widerstandsschaltung (11, 21) der Doppelsonde (0) zu versorgen, und dass die Vorrichtung zum Messen von elektrischem Strom (20) dazu konfiguriert ist, den in jeder Widerstandsschaltung (11,21) der Doppelsonde (0) fließenden elektrischen Strom zu messen,
 so dass Gleichgewichtstemperaturen der Monosonden (1, 2) voneinander verschieden sein können, wenn man elektrische Ströme unterschiedlicher Stärken an die Widerstandsschaltungen anlegt, und unabhängig voneinander gemessen werden können.

**4.** Verfahren (100) zur Einschätzung mindestens einer Betriebsbedingung eines Wärmetauschers, das ein System (1000) nach dem vorhergehenden Anspruch einsetzt, umfassend mindestens die folgenden Schritte, die bevorzugt von der Überwachungsvorrichtung (30) koordiniert werden:

von einem ersten Zeitpunkt $t1$ an:

- Versorgen (110) der Widerstandsschaltungen (11, 21) mit elektrischen Strömen unterschiedlicher Stärken,
- Messen (120) der Spannung an den Klemmen jeder der Widerstandsschaltungen (11, 21) und gegebenenfalls des elektrischen Stroms in jeder der Widerstandsschaltungen (11, 21), dann
- Berechnen (130) der Temperatur $T1(t1), T2(t1)$ jeder Monosonde (1, 2) mindestens in Abhängigkeit von der Messung der Spannung an den Klemmen der entsprechenden Widerstandsschaltung (11, 21) und

von einem zweiten Zeitpunkt $t2$ an, der von dem ersten Zeitpunkt $t1$ verschieden ist:

- Versorgen (140) der Widerstandsschaltungen (11, 21) mit elektrischen Strömen unterschiedlicher Stärken,
- Messen (150) der Spannung an den Klemmen jeder der Widerstandsschaltungen (11, 21) und gegebenenfalls des elektrischen Stroms in jeder der Widerstandsschaltungen (11, 21), dann
- Berechnen (160) der Temperatur $T1(t2), T2(t2)$ jeder Monosonde (1, 2) mindestens in Abhängigkeit von der Messung der Spannung an den Klemmen der entsprechenden Widerstandsschaltung (11, 21),

wobei das Verfahren (100) ferner mindestens den folgenden Schritt umfasst:

- Berechnen (170), in Abhängigkeit vom Wärmewiderstand $Rs$ der Doppelsonde (0), vom Wärmewiderstand $Rp$ der Wand (40) und von den Temperaturen $T1(t1), T2(t1), T1(t2)$ und $T2(t2)$ der Monosonden (1, 2), mindestens eine der folgenden Betriebsbedingungen: die Temperatur $Tf$ des Fluids $f$ auf der ersten Seite der Wand (40), den Wärmewiderstand R auf der ersten Seite der Wand (40), die Temperatur $Tf'$ des Fluids $f'$ auf der zweiten Seite der Wand (40) und den Wärmewiderstand $R'$ auf der zweiten Seite der Wand (40).

**5.** Verfahren (100) nach dem vorhergehenden Anspruch, umfassend ferner den folgenden Schritt: Berechnen (180) eines Wärmestroms $\phi$, der zwischen den Fluiden $f$ und $f'$ durch die Wand (40) hindurch getauscht wird, in Abhängigkeit von den Temperaturen $Tf$ und $Tf'$ der Fluide $f$ und $f'$ und von den Wärmewiderständen $R$ und $R'$.

**6.** Verfahren (100) nach einem der Ansprüche 4 und 5, bei dem jede Messung der Spannung (120, 150) und gegebenenfalls des elektrischen Stroms durchgeführt wird, nachdem ein stationärer Zustand der Veränderung des/der einen unter einem Widerstand der Widerstandsschaltung (11, 21) oder der Temperatur $T1, T2$ der Monosonde (1, 2) erreicht wurde.

**7.** Verfahren (100) nach einem der Ansprüche 4 bis 6, bei dem jede der Differenzen zwischen den Stärken der elektrischen Ströme (110, 140), die die Widerstandsschaltungen (11, 21) versorgen, so parametriert ist, dass eine Temperaturdifferenz $T2(t1)-T1(t1)$ und $T2(t2)-T2(t1)$ zwischen den Monosonden (1, 2) herbeigeführt wird, die von der Messvorrichtung (20) als eine Differenz zwischen den Messungen (120, 150) der Spannung und gegebenenfalls des elektrischen Stroms wahrnehmbar ist.

**8.** Verfahren (100) nach einem der Ansprüche 4 bis 7, bei dem bei einer der Monosonden (1, 2) die Stärke des elektrischen Stroms (110, 140), der die entsprechende Widerstandsschaltung (11, 21) versorgt, so parametriert ist, dass eine Temperaturveränderung der Monosonde (1, 2) von null herbeigeführt wird.

**9.** Verfahren (100) nach einem der Ansprüche 4 bis 8, bei dem jede der Differenzen zwischen den Stärken der elektrischen Ströme (110, 140), die die Widerstandsschaltungen (11, 21) versorgen, so parametriert ist, dass die Temperaturen $Tf$ und $Tf'$ der Fluide $f$ und $f'$ nicht geändert werden.

**10.** Verfahren (100) nach einem der Ansprüche 4 bis 9, bei dem die Differenz zwischen den Stärken der elektrischen Ströme (140), die die Widerstandsschaltungen (11, 21) vom zweiten Zeitpunkt $t2$ an versorgen, so parametriert ist, das sie verschieden von der Differenz zwischen den Stärken der elektrischen Ströme (110) ist, die die Widerstandsschaltungen (11, 21) vom ersten Zeitpunkt $t1$ an versorgen.

**11.** Verfahren (100) nach einem der Ansprüche 4 bis 10, bei dem die Zeitpunkte $t1$ und t2 zeitlich ausreichend nah gewählt sind, um mindestens eine Schwankung der Wärmewiderstände $R$ und $R'$ auf jeder Seite der Wand (40) vernachlässigen zu können.

12. Verfahren (100) nach einem der Ansprüche 4 bis 11, umfassend ferner den folgenden Schritt: Berechnen (190) mindestens eines unter dem Verschmutzungswiderstand $Re$ auf der ersten Seite der Wand (40) und dem Verschmutzungswiderstand $R'e$ auf der zweiten Seite der Wand (40), in Abhängigkeit von jeweils einem unter dem Konvektionswiderstand $Rcv$ auf der ersten Seite der Wand (40) und dem Konvektionswiderstand $R'cv$ auf der zweiten Seite der Wand (40).

13. Verfahren (100) nach dem vorhergehenden Anspruch, umfassend ferner den folgenden Schritt: Berechnen (200) mindestens einer unter der Verschmutzungsdicke auf der ersten Seite der Wand (40) und der Verschmutzungsdicke auf der zweiten Seite der Wand (40) in Abhängigkeit jeweils von einem unter dem Verschmutzungswiderstand $Re$ auf der ersten Seite der Wand (40) und dem Verschmutzungswiderstand $R'e$ auf der zweiten Seite der Wand (40) und einer unter der Wärmeleitfähigkeit der Verschmutzung (50) auf der einen Seite der Wand (40) und der Wärmeleitfähigkeit der Verschmutzung (50') auf der zweiten Seite der Wand (40).

14. Verfahren (100) nach einem der Ansprüche 4 bis 13, bei dem die Schritte des Versorgens (110, 140), des Messens (120, 150) und des Berechnens der Temperatur (130, 160) von zwei Zeitpunkten $t3$ und $t4$ an, die verschieden voneinander sind und nach den Zeitpunkten $t1$ und $t2$ liegen, wiederholt werden können, so dass die Überschreitung eines vorbestimmten Schwellenwerts durch mindestens eine unter:

- einer Differenz zwischen den berechneten Wärmewiderständen $R$ (170) und
- einer Differenz zwischen den berechneten Wärmewiderständen $R'$ (170), repräsentativ für eine Veränderung und gegebenenfalls eine Verschlechterung der Betriebsbedingungen des Wärmetauschers ist und gegebenenfalls ein Treffen einer Entscheidung über die Ausführung eines Vorgangs zur Instandsetzung oder Ersetzung der Wand (40) oder sogar des Wärmetauschers ermöglicht.

15. Computerprogrammprodukt mit Anweisungen, die, wenn sie von mindestens einem Prozessor interpretiert und abgearbeitet werden, die Berechnungsschritte (130), (160) und (170) des Verfahrens (100) nach einem der Ansprüche 4 bis 14 durchführen.

## Claims

1. Dual temperature probe (0) comprising:

- two single temperature probes (1, 2), each comprising a resistive circuit (11,21) with a heat-sensitive electrically conductive material base, each resistive circuit (11, 21) being intended to be linked to an electrical current measuring device (20), and
- a layer (3) with a thermally insulating material base inserted between the single probes (1, 2), such that the dual probe (0) has a known thermal resistance $Rs$ according to the thickness $e$ and according to the thermal conductivity $\lambda$ of the inserted layer (3), the dual probe being **characterised in that** each resistive circuit (11, 21) is furthermore intended to be linked to an electrical power device (10), such that the temperatures balancing the single probes (1, 2) can be different from one another, when electrical currents of different intensities are applied to the resistive circuits.

2. Dual temperature probe (0) according to the preceding claim, wherein each single probe (1, 2) further comprises at least one encapsulator (13, 23) at least partially coating the resistive circuit (11, 21), the encapsulator (13, 23) being dielectric material-based.

3. System (1000) for evaluating at least one functioning condition of a heat exchanger, comprising:

- at least one dual temperature probe (0) comprising:

  ○ two single temperature probes (1, 2) each comprising a resistive circuit (11, 12) with a thermosensitive electrically conductive material base, and
  ○ a layer (3) with a thermally insulating material base, inserted between the single probes (1, 2),

such that the dual probe (0) has a known thermal resistance *Rs,*
- a wall (40) of a heat exchanger through which a thermal transfer is intended to be made between two fluids *f* and *f'* circulating on either side of the wall (40) and on which a clogging (50) is likely to settle,
- an electrical power device (10),
- a device for measuring electrical current (20), and
- a device for supervising (30) the power device (10) and the measuring device (20), the dual probe (0) being arranged on one from among a first side and a second side of the wall (40) having a reference thermal resistance *Rp,*

the system being **characterised in that** the electrical power device (20) is configured to supply each resistive circuit (11, 21) of the dual probe (0) and **in that** the device for measuring electrical current (20) is configured to measure the electrical current circulating in each resistive circuit (11, 21) of the dual probe (0),

such that the temperatures balancing the single probes (1, 2) can be different from one another, when electrical currents of different intensities are applied to the resistive circuits, and can be measured independently of one another.

4. Method (100) for evaluating at least one functioning condition of a heat exchanger implementing a system (1000) according to the preceding claim, comprising at least the following steps, preferably coordinates by the supervision device (30):

from a first instant *t1:*

- supplying (110) the resistive circuits (11, 21) with electrical currents of different intensities,
- measuring (120) the voltage at the terminals of each of the resistive circuits (11, 21), and possibly the electrical current in each of the resistive circuits (11, 21), then
- calculating (130) the temperature *T1(t1), T2(t1)* of each single probe (1, 2) at least according to the voltage measurement at the terminals of the corresponding resistive circuit (11, 21), and

from a second instant *t2,* different from the first instant *t1:*

- supplying (140) the resistive circuits (11, 21) with electrical currents of different intensities,
- measuring (150) the voltage at the terminals of each of the resistive circuits (11,21), and possibly the electrical current in each of the resistive circuits (11,21), then
- calculating (160) the temperature *T1(t2), T2(t2)* of each single probe (1, 2) at least according to the voltage measurement at the terminals of the corresponding resistive circuit (11, 21),

the method (100) further comprising at least the following step:

- calculating (170), according to the thermal resistance *Rs* of the dual probe (0), to the thermal resistance *Rp* of the wall (40) and to the temperatures *T1(t1), T2(t1), T1(t2)* and *T2(t2)* of the single probes (1, 2), at least one of the following functioning conditions: the temperature *Tf* of the fluid *f* of the first side of the wall (40), the thermal resistance *R* of the first side of the wall (40), the temperature *Tf'* of the fluid *f'* of the second side of the wall (40) and the thermal resistance *R'* of the second side of the wall (40).

5. Method (100) according to the preceding claim, further comprising the following step: calculating (180) a thermal flow $\phi$ exchanged between the fluids *f* and *f'* through the wall (40) according to the temperatures *Tf* and *Tf'* of the fluids *f* and *f'* and the thermal resistances *R* and *R'.*

6. Method (100) according to any one of claims 4 and 5, wherein each voltage measurement (120, 150), and possibly electrical current, is taken after a stationary operation of evolution of one from among a resistance of the resistive circuit (11, 21) or the temperature *T1, T2* of the single probe (1, 2) has been reached.

7. Method (100) according to any one of claims 4 to 6, wherein each of the differences between the intensities of the electrical currents supplying (110, 140) the resistive circuits (11, 21) is configured so as to induce a difference in temperatures *T2(t1)-T1(t1)* and *T2(t2)-T2(t1)* between the single probes (1, 2) perceptible by the measuring device (20) as a difference between the voltage measurements (120, 150), and possibly electrical current.

8. Method (100) according to any one of claims 4 to 7, wherein, for one of the single probes (1, 2), the intensity of the electrical current supplying (110, 140) the corresponding resistive circuit (11, 21) is configured so as to induce a zero temperature evolution of the single probe (1, 2).

9.  Method (100) according to any one of claims 4 to 8, wherein each of the differences between the intensities of the electrical currents supplying (110, 140) the resistive circuits (11, 21) is configured so as to not modify the temperatures $Tf$ and $Tf'$ of the fluids $f$ and $f'$.

10. Method (100) according to any one of claims 4 to 9, wherein the difference between the intensities of the electrical currents supplying (140) the resistive circuits (11, 21) from the second instant $t2$ is configured so as to be difference from the difference between the intensities of the electrical currents supplying (110) the resistive circuits (11, 21) from the first instant $t1$.

11. Method (100) according to any one of claims 4 to 10, wherein the instants $t1$ and $t2$ are selected sufficiently close over time to be able to ignore at least one variation in the thermal resistances $R$ and $R'$ of each side of the wall (40).

12. Method (100) according to any one of claims 4 to 11, further comprising the following step: calculating (190) at least one from among the clogging resistance $Re$ of the first side of the wall (40) and the clogging resistance $R'e$ of the second side of the wall (40), according to one respective from among the convection resistance $Rcv$ of the first side of the wall (40) and the convection resistance $R'cv$ of the second side of the wall (40).

13. Method (100) according to the preceding claim, further comprising the following step: calculating (200) at least one from among the clogging thickness of the first side of the wall (40) and the clogging thickness of the second side of the wall (40), according to one respective from among the clogging resistance $Re$ of the first side of the wall (40) and the clogging resistance $R'e$ of the second side of the wall (40) and one respective from among the thermal conductivity of the clogging (50) of the first side of the wall (40) and the thermal conductivity of the clogging (50') of the second side of the wall (40).

14. Method (100) according to any one of claims 4 to 13, wherein the steps of supplying (110, 140), measuring (120, 150) and calculating temperature (130, 160) can be repeated from two instants $t3$ and $t4$, different from one another, and subsequent to the instants $t1$ and $t2$, such that the exceeding of a predetermined threshold value by at least one from among:

    - a difference between the calculated thermal resistances $R$ (170), and
    - a difference between the calculated thermal resistances $R'$ (170),
    that is representative of an evolution, and possibly a degradation, of the functioning conditions of the heat exchanger and, if necessary, making it possible to make a decision regarding the carrying out of a refurbishment or replacement operation of the wall (40), even of the heat exchanger.

15. Computer program product comprising instructions, which, when they are interpreted and executed by at least one processor carrying out the calculation steps (130), (160) and (170) of the method (100) according to any one of claims 4 to 14.

FIG. 1

11,21

FIG. 2

1,2

11,21

13,23

FIG. 3

FIG. 4

FIG. 5

1000

0

40

12,22

20 ... 30 ... 10

FIG. 6

$\Phi_{2,s}$

f, Tf

2  3  1

50

40

50'

f', Tf'

$\Phi$

$\Phi_{2,b}$

FIG. 7

100 ⌐ 110

Alimenter différemment les circuits résistifs des mono-sondes d'une bi-sonde disposée sur la paroi d'un échangeur thermique à travers laquelle s'opère un transfert de chaleur entre deux fluides f et f'

↓ 120

Mesurer la tension aux bornes de chaque circuit résistif des mono-sondes

↓ 130

En déduire les températures T1(t1) et T2(t1) des mono-sondes

↓ 140

Alimenter à nouveau différemment les circuits résistifs des mono-sondes

↓ 150

Mesurer à nouveau la tension aux bornes de chaque circuit résistif des mono-sondes

↓ 160

En déduire les températures T1(t2) et T2(t2) des mono-sondes

↓ 170

Calculer les températures Tf et Tf' des fluides f et f' et les résistances thermiques R et R' de chaque côté de la paroi en fonction de T1(t1), T2(t1), T1(t2) et T2(t2)

↓ 180,190,200

En déduire : 1) un flux thermique Φ échangé entre les fluides f et f', 2) les résistances d'encrassement Re et R'e de chaque côté de la paroi, 3) les épaisseurs d'encrassement de chaque côté de la paroi

FIG. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0194876 A1
- WO 2007099240 A1
- WO 2009153323 A1
- US 20110051776 A1
- WO 2010082006 A1